Europäisches Patentamt

European Patent Office

Office européen des brevets

(19)

(11) Veröffentlichungsnummer: **0 096 251**

**A2**

(12) ## EUROPÄISCHE PATENTANMELDUNG

(21) Anmeldenummer: 83104899.6

(22) Anmeldetag: 18.05.83

(51) Int. Cl.³: **H 02 K 5/22**

(30) Priorität: 03.06.82 DE 3220869

(43) Veröffentlichungstag der Anmeldung:
21.12.83 Patentblatt 83/51

(84) Benannte Vertragsstaaten:
DE FR GB IT

(71) Anmelder: ROBERT BOSCH GMBH
Postfach 50
D-7000 Stuttgart 1(DE)

(72) Erfinder: Wolf, Erwin
Rosenhain 6
D-7153 Weissach i. T.(DE)

(54) Elektrowerkzeug mit einem geteilten Gehäuse.

(57) Es wird ein Elektrowerkzeug mit einem geteilten Gehäuse, insbesondere eine Elektro-Handkreissäge vorgeschlagen, bei dem das Gehäuse (2, 3, 6) längs von Kanälen (7, 8) für intern zu verlegende elektrische Verbindungsleitungen (11, 12) geteilt ausgebildet ist. Im Winkel zueinander verlaufende Kabelkanäle (7, 8) sind so in ihrer gesamten Länge von der Seite her zugänglich. Der Elektromotor und entfernt angeordnete Schaltelemente (9) können in das Gehäuse (2, 3) montiert und danach die verbindenden Kabel (11, 12) leicht eingebracht werden. Auf diese Weise sind die Montage und die Reparatur wesentlich vereinfacht.

FIG.1

EP 0 096 251 A2

R.    . ﬤ                                0096251
29.4.1982 Br/Le


ROBERT BOSCH GMBH, 7000 STUTTGART 1


## Elektrowerkzeug mit einem geteilten Gehäuse

### Stand der Technik

Die Erfindung geht aus von einem Elektrowerkzeug nach der
Gattung des Hauptanspruchs. Es ist schon ein solches Elektrowerkzeug bekannt aus der DE-OS 29 28 931, bei dem der Handgriff ein Gehäuse aus zwei längsgeteilten Schalen hat. Durch
diese Schalenbauweise sind die innenliegenden Kabel und
deren Befestigungsmittel gut zugänglich. Eine solche Schalenbauweise ist aber für Elektrowerkzeuge mit im Winkel zueinander stehenden Gehäuse und Griffteilen wie z.B. bei Elektro-
Handkreissägen, für den Gehäuseaufbau nicht geeignet. Bei
bekannten Konstruktionen dieser Art sind in das Motorgehäuse Kanäle eingeformt, durch die die zum Verbinden der
Motoranschlußklemmen mit den Schaltmitteln des Elektrowerkzeugs erforderlichen Leitungen hindurchgeschoben
werden müssen. Zur Montage dieses Elektrowerkzeugs müssen
die Leitungen an dem Stator des Motors angeschlossen und mit
dem Einfügen des Stators in das Motorgehäuse durch die Kanäle
hindurchgefädelt werden. Dies erschwert die Montage des
Elektrowerkzeugs und auch dessen Reparatur.


...

Vorteile der Erfindung

Das erfindungsgemäße Elektrowerkzeug mit den kennzeichnenden
Merkmalen des Hauptanspruchs hat demgegenüber den Vorteil,
daß die Einbauteile wie Motor und Schaltelemente ohne Schwierigkeit zunächst fest montiert und erst danach mit den erforderlichen Anschlußleitungen verbunden werden können. Durch das
Auftrennen des Gehäuses längs von Kanälen für intern zu verlegende elektrische Verbindungsleitungen entfällt das montage
und reparaturfeindliche Durchfädeln der Verbindungsleitungen.
Diese Leitungen können beim Montieren seitlich eingelegt und
mit ihren Anschlußmitteln verbunden werden. Vor einer Reparatur lassen sie sich leicht auf Beschädigungen kontrollieren
ohne zunächst aus ihren Kanälen entfernt werden zu müssen.

Durch die in den Unteransprüchen aufgeführten Maßnahmen sind
vorteilhafte Weiterbildungen und Verbesserungen des im Hauptanspruch angegebenen Elektrowerkzeugs möglich. Besonders vorteilhaft ist die einstückige Ausbildung von im Winkel zueinander verlaufenden Kanalabdeckungen.

Zeichnung

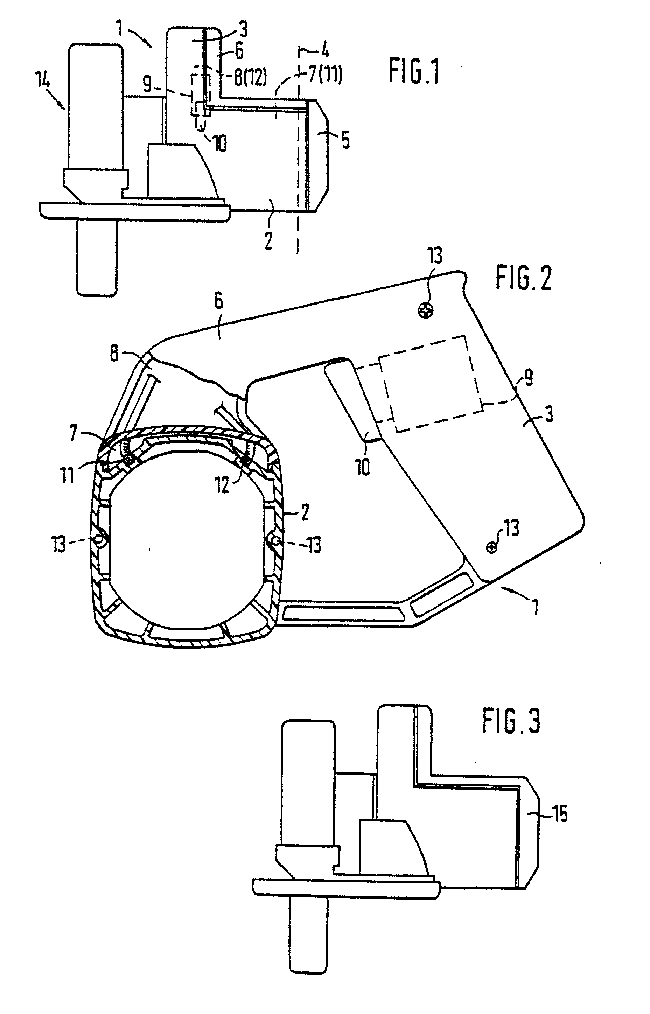

Zwei Ausführungsbeispiele des Erfindungsgegenstandes sind in
der Zeichnung dargestellt und in der nachfolgenden Beschreibung
näher erläutert. Es zeigen Figur 1 eine Ansicht einer erfindungsgemäß ausgebildeten Elektro-Handkreissäge mit einer
im Winkel verlaufenden, einstückig ausgebildeten Kanalabdeckung
und einem zusätzlichen Gehäusedeckel, Figur 2 eine vergrößerte
Ansicht zu Figur 1 vom Gehäusedeckel her gesehen, teilweise
geschnitten und Figur 3 eine zweite Ausführungsform ähnlich
Figur 1, bei der alle Gehäuseabdeckungen zu einem Bauteil zusammengefaßt sind.

Beschreibung der Ausführungsbeispiele

Eine Elektro-Handkreissäge 1 nach einem ersten Ausführungsbeispiel ist mit einem Gehäuse versehen, das ein Motorgehäuse 2 und ein Handgriffgehäuse 3 zusammenfaßt. In einer gestrichelt angegebenen Ebene 4 liegen vier Anschlußklemmen für den Stator des Elektromotors der Elektro-Handkreissäge im Innern des Motorgehäuses 2, unter einem Gehäusedeckel 5. Der Gehäusedeckel 5 übergreift das ihm zugewendete Ende einer winkelförmigen Kanalabdeckung 6, die sowohl einen Kabelkanal 7 des Motorgehäuses 2 als auch einen Kabelkanal 8 des Handgriffgehäuses 3 abdeckt. In Figur 2 ist in das Handgriffgehäuse 3 ein Schaltergehäuse 9 gestrichelt eingezeichnet, das mit einer Handhabe 10 verbunden ist. Die vier Anschlußklemmen des Motors sind nicht näher dargestellt. Gezeigt sind in Figur 2 zwei Kabel 11 und 12 die vom Stator des Motors zum Schaltergehäuse 9 führen. Der Gehäusedeckel 5 und die Kanalabdeckung 6 sind durch Schrauben 13 mit dem Motorgehäuse bzw. dem Handgriffgehäuse verbunden. Der das ihm zugewendete Ende der Kanalabdeckung 6 übergreifende Gehäusedeckel 5 sichert die Kanalabdeckung 6 in ihrer am Motorgehäuse 2 anliegenden Stellung. Ein Sägeblattschutzgehäuse 14 ist in bekannter Weise mit dem Motorgehäuse verbunden. Dieser Teil der Elektro-Handkreissäge ist von der Erfindung nicht berührt.

Bei der Montage der Elektro-Handkreissäge wird zunächst der Motor in das Motorgehäuse 2 und das Schaltergehäuse 9 in das Handgriffgehäuse 3 eingebaut. Danach werden die Kabel 11 und 12 in die Kabelkanäle 7 und 8 eingelegt. Nach dem Anschließen dieser Kabel 11 und 12 an den Stator des Motors und das Schaltergehäuse 9 sind die erforderlichen elektrischen Verbindungen hergestellt. Nun kann die Kanalabdeckung 6 aufgesetzt und mittels Schrauben 13 befestigt werden. Danach setzt man den

...

- 4 -

Gehäusedeckel 5 auf und schraubt ihn fest. Mit ihm ist auch das ihm zugewendete Ende der Kanalabdeckung 6 gesichert.

Im Ausführungsbeispiel nach Figur 3 sind die Kanalabdeckung 6 und der Gehäusedeckel 5 zu einem einzigen, abnehmbaren Gehäuseteil 15 zusammengefaßt. Im Übrigen gleicht dieses Ausführungsbeispiel dem nach den Figuren 1 und 2.

R. 17325
29.4.1982 Br/Le

0096251

ROBERT BOSCH GMBH, 7000 STUTTGART 1

Ansprüche

1. Elektrowerkzeug mit einem geteilten Gehäuse, insbesondere Elektro-Handkreissäge, dadurch gekennzeichnet, daß das Gehäuse (2, 3) längs von Kanälen (7, 8) für intern zu verlegende elektrische Verbindungsleitungen (11, 12) geteilt ausgebildet ist.

2. Elektrowerkzeug nach Anspruch 1, dadurch gekennzeichnet, daß wenigstens ein Gehäuseteil als abnehmbarer Deckel (5) ausgebildet ist.

3. Elektrowerkzeug nach einem der Ansprüche 1 und 2, dadurch gekennzeichnet, daß ein abnehmbares Gehäuseteil (6) im Winkel zueinander verlaufende Kanäle (7, 8) abdeckend entsprechend winkelig ausgebildet ist.

4. Elektrowerkzeug nach einem der Ansprüche 1 bis 3, dadurch gekennzeichnet, daß sämtliche Kanalabdeckungen zu einem einstückigen, abnehmbaren Gehäuseteil (15) zusammengefaßt sind.

5. Elektrowerkzeug nach einem der Ansprüche 1 bis 3, dadurch gekennzeichnet, daß ein Gehäusedeckel (5) einen anderen abdeckenden Gehäuseteil (6) in seiner Abdecklage sichernd übergreift.

FIG.1

FIG.2

FIG.3